# EUROPÄISCHE PATENTSCHRIFT

(11) **EP 0 645 076 B1**
(45) Veröffentlichungstag und Bekanntmachung des Hinweises auf die Patenterteilung: **12.01.2000**
(21) Anmeldenummer: 94114355.4
(22) Anmeldetag: 13.09.1994
(51) Int. Cl.: A01D 45/02, A01F 29/06

(54) **Feldhäcksler**
Field chopper
Ramasseuse-hâcheuse

(30) Priorität: 28.09.1993 DE 9314621 U
(43) Veröffentlichungstag der Anmeldung: 29.03.1995
(73) Patentinhaber: Maschinenfabrik Kemper GmbH & Co. KG, 48703 Stadtlohn (DE)
(72) Erfinder: Bertling, Alfred, Dipl.-Ing., D-48703 Stadtlohn (DE)
(74) Vertreter: Busse & Busse Patentanwälte

(56) Entgegenhaltungen:
- DE-A- 3 630 742
- DE-C- 3 417 314
- GB-A- 2 014 436
- US-A- 4 478 030
- SOVIET PATENTS ABSTRACTS, PQ Sektionen, Woche 9313, 19. Mai 1993 DERWENT SCIENTIFIC AND PATENT INFORMATION, P12; & SU-A-1727 691 (VALI)

## Beschreibung

Die Erfindung bezieht sich auf einen Feldhäcksler gemäß dem Oberbegriff des Anspruchs 1.

Beim Häckseln von Feldfrüchten mit Körnern für Silagezwecke ist es wichtig, daß die Körner aufgebrochen werden. Aus der DE-OS 40 07 794 ist es zu diesem Zweck bekannt, über jedem Häckselmesser eine sog. Wendeplatte vorzusehen, die an einer Stirnfläche mit einer groben Profilierung versehen ist, gegen die das nach dem Schneidvorgang nachgeschobene Erntegut gepreßt wird, so daß darin befindliche Körner aufgebrochen oder angerissen werden, woraufhin der nächste Schnitt eines weiteren Messers erfolgt. Um diese Wendeplatte in die Eingriffs- bzw. Außereingriffsstellung (für z.B. Gras) zu bringen, bedarf es des Lösens aller Messer, außerdem lassen sich die Profilierungen nur gesondert nachschleifen.

SU-A-17 27 691 beschreibt einen Feldhäcksler gemäß dem Oberbegriff des Anspruchs 1. Die sich an die Schneide anschließende, dem Erntegut zugewandte profilierte Keilfläche ist bei dem bekannten Feldhäcksler von einer an das Häckselmesser angeschraubten Profilleiste gebildet.

Es ist Aufgabe der vorliegenden Erfindung, den Wirkungsgrad der Körnerzerkleinerung eines Feldhäcksler der eingangs genannten Art zu verbessern.

Diese Aufgabe wird durch die in Anspruch 1 angegebenen Merkmale gelöst.

Durch das Aufbringen einer Profilierung auf die sich an die Schneide des Häckselmessers rückseitig anschließende Keilfläche wird ohne besondere Zusatzteile eine wesentliche Verbesserung des Wirkungsgrades des Feldhäckslers erreicht. Der Erntegutstrang wird zunächst in üblicher Weise von der Schneide des Häckselmessers geschnitten und dann mit seiner Schnittfläche gegen die sich hinter der Schneide erstreckende Keilfläche mit der dort vorgesehenen Profilierung gepreßt, wodurch die in diesem Teil des Ernteguts enthaltenen und nicht geschnittenen Körner aufgebrochen oder angerissen werden und die Phase bis zum nächsten Schnitt verkürzt wird. Für körnerfreies Gut werden kurzerhand die Messer als ganzes gegen herkömmliche Messer ausgetauscht, ohne daß es einer besonderen Teile-Montage bedarf. Von besonderem Vorteil ist, daß die erfindungsgemäßen Messer mit ihrer Schneide und Profilierung gleichzeitig nachgeschliffen werden können.

Weitere Einzelheiten und Vorteile der Erfindung ergeben sich aus der nachfolgenden Beschreibung und der Zeichnung, die ein Ausführungsbeispiel des Gegenstands der Erfindung schematisch veranschaulicht, und zwar in Anwendung bei einem Scheibenhäcksler, ohne jedoch hierauf beschränkt zu sein. In der Zeichnung zeigen:
- Fig. 1: eine Teilansicht eines als Häckselscheibe ausgebildeten Rotationskörpers mit Häckselmessern nach der Erfindung,
- Fig. 2: einen Teil-Querschnitt durch den Profilierungsbereich eines Häckselmessers nach Linie II-II in Fig. 1 und
- Fig. 3: einen Teil-Schnitt durch den Mittenbereich eines Scheiben-Feldhäckslers mit den Messern nach der Erfindung.

An einem hier allgemein mit 1 bezeichneten Rotationskörper sind im Abstand mehrere Häckselmesser 2 angeordnet. Der Rotationskörper 1 ist im dargestellten Ausführungsbeispiel als eine die Messer 2 stirnseitig in einer angenähert radialen Ausrichtung tragende Häckselscheibe 3 ausgebildet, die sich in Richtung des Pfeiles A rotierend bewegt. Die Häckselmesser 2 kommen wahrend der Drehbewegung der Häckselscheibe 3 jeweils mit einer Gegenschneide 4 in Kontakt.

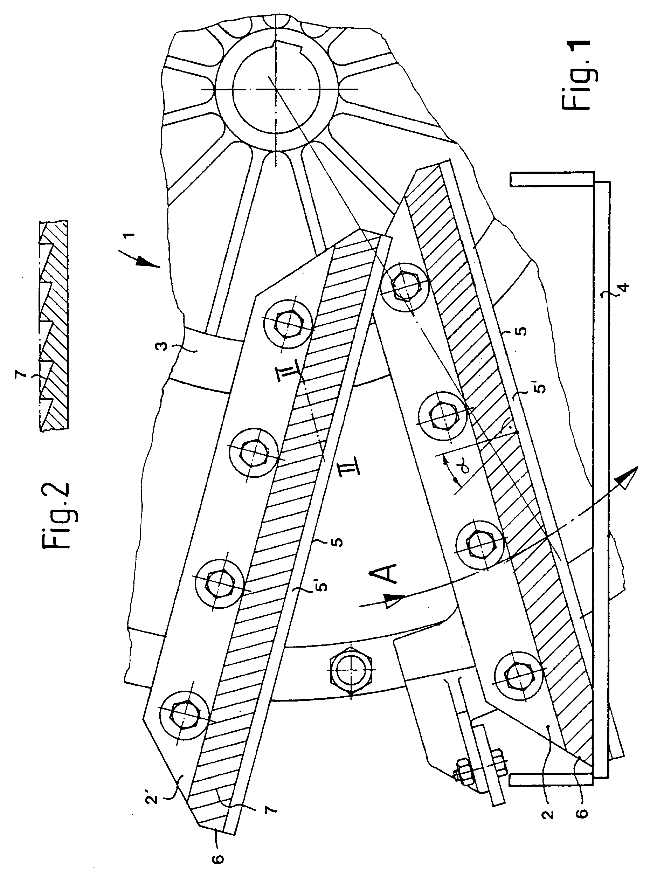

Die Häckselmesser 2 sind so gestaltet, daß sie im in Drehrichtung vorderen Bereich eine Schneide 5 mit Freifläche 5' und eine sich daran mit einem Winkel β anschließende Keilfläche 6 aufweisen. Diese Keilfläche 6 ist mit einer sägezahnförmigen Profilierung (7) versehen, wie sie in Fig. 2 veranschaulicht ist. Die Profilierung 7 erstreckt sich über die Länge des Häckselmessers 2, wobei die Sägezähne zweckmäßig, wie in Fig. 1 zu sehen, bezüglich der Senkrechten zur jeweiligen Schneide 5,5' unter einem spitzen Winkel α schräggestellt sind, d. h. in diesem Fall vom Umfangskreis nach innen hin verlaufen. Hierdurch wird im Betrieb eine Verbesserung der Wirkung der Profilierung erreicht, weil die Arbeitsfläche der einzelnen Sägezähne am Gut vergrößert wird. Die Profilierung 7 ist nachschleifbar, und zwar zusammen mit der Schneide 5 der Messer, wenn diese an der Freifläche 5' bei entsprechender Schrägstellung des Messers bzw. des Schleifwerkzeugs nachgeschliffen wird.

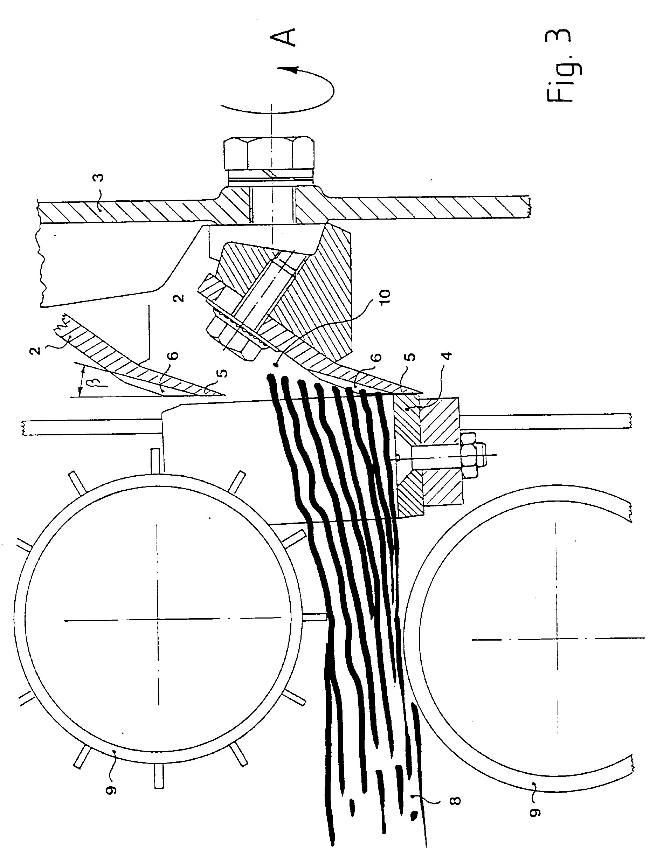

Die Fig. 3 zeigt die Häckselmesser 2 in Eingriff mit dem Erntegut. Ein Erntegutstrang 8 wird von Presswalzen 9 vorverdichtet und in den Arbeitsraum 10 des Feldhäckslers geschoben. Die Häckselscheibe 3 mit den aufgeschraubten Häckselmessern 2 bewegt sich auch hier in Richtung des Pfeiles A. Der Erntegutstrang 8 wird dem jeweils über die Gegenschneide 4 hinausgeschobenen Teil von einem der rotierenden Häckselmesser 2 abgeschnitten. Das Schneiden bewirkt die Schneide 5 mit Freifläche 5', während die nachfolgende, zur Schneide 5,5' unter dem Winkel β abgeknickte Keilfläche 6 mit der Sägezahnprofilierung 7 an der Schnittfläche des weiterhin vorgeschobenen Ernteguts entlangschrappt, wodurch die nicht geschnittenen Körner des Erntegutes aufgebrochen oder aufgeritzt werden bis - bei entsprechender Rotationsgeschwindigkeit - ein weiterer Schnitt durch das nachfolgende Messer erfolgt. Der Anteil des nicht (durch Schneiden oder Schrappen) behandelten Ernteguts läßt sich auf diese Weise mit einem Werkzeug wesentlich verringern

Wenngleich im Vorsteheden ein Scheibenhäcksler als Anwendungsbeispiel beschrieben wurde, so ist für den Fachmann ohne weiteres ersichtlich, daß die erfindungsgemäßen Häckselmesser ebenso gut auch bei Trommelhäckslern in der dort üblichen Anbringung auf dem Umfang des als Trommel ausgebildeten Rotationskörpers eingesetzt werden können und im Rahmen der Schutzansrpüche bei jeder Art von Feldhäckslern Verwendung finden können.

## Patentansprüche

1. Feldhäcksler für kornhaltiges Erntegut, insbesondere für Silomais, dessen im Arbeitsraum (10) eines Häckslergehäuses rotierendes Häckselorgan (1) mit einer Anzahl von Häckselmessern (2) versehen ist, die in ihrem in Drehrichtung vorderen Bereich eine Schneide (5) mit Freifläche (5') sowie eine sich daran anschließende, dem Erntegut zugewandte profilierte Keilfläche (6) aufweisen und mit einer feststehenden Gegenschneide (4) zusammenwirken, dadurch gekennzeichnet, daß jedes Häckselmesser (2) so gestaltet ist, daß seine Keilflache (6) mit einer bezüglich der Senkrechten zur Schneide (5) unter einem spitzen Winkel (α) schräggestellten sägezahnförmigen Profilierung (7) versehen ist.

2. Feldhäcksler nach Anspruch 1, dadurch gekennzeichnet, daß die Keilfläche (6) unter einem spitzen Winkel (β) von der Schneide (5,5') abgeknickt ist.

## Claims

1. A forage harvester for grain-bearing crops, particularly for silo maize and of which the chopping member (1), rotating in the working space (10) of a chopper housing, is provided with a number of chopper-cutters (2) which have in their part which is in front in the direction of rotation a cutting edge (5) with an exposed surface (5') and, adjacent thereto and directed towards the crops, a profiled wedge-shaped surface (6) and with a fixed counter-cutter (4), characterised in that each chopper-cutter (2) is so designed that its wedge-shaped surface (6) is provided with an oblique serrated profiling (7) disposed at an acute angle (α) to a line perpendicular to the cutting edge (5).

2. A forage harvester according to Claim 1, characterised in that the wedge-shaped surface (6) is angled over from the cutting edge (5, 5') at an acute angle (β).

## Revendications

1. Ramasseuse-hacheuse pour moissons de céréales, en particulier pour du maïs pour silo, dont l'organe hacheur (1), tournant dans l'espace de travail (10) d'un boîtier de hacheuse, est pourvu d'un certain nombre de couteaux de hachage (2), qui présentent, dans leur zone avant dans le sens de rotation, un tranchant (5) à surface libre (5') ainsi qu'une surface de calage profilée (6) qui s'y raccorde et qui est tournée vers les plantes moissonnées et coopèrent avec un contre-tranchant fixe (4), caractérisée en ce que chaque couteau de hachage (2) est adapté de manière à ce que sa surface de calage (6) soit pourvue d'un profil en dents de scie (7) incliné sous un angle aigu (α) par rapport à la perpendiculaire au tranchant (5).

2. Ramasseuse-hacheuse selon la revendication 1, caractérisée en ce que la surface de calage (6) fait avec le tranchant (5, 5') un angle aigu (β).
